# EUROPÄISCHE PATENTSCHRIFT

(11) **EP 0 722 855 B1**
(45) Veröffentlichungstag und Bekanntmachung des Hinweises auf die Patenterteilung: **14.03.2001**
(21) Anmeldenummer: 96100584.0
(22) Anmeldetag: 17.01.1996
(51) Int. Cl.: B60N 2/02, B60N 2/24

(54) **Sitzbank für Kraftfahrzeuge, insbesondere für Kleintransporter**
Bench for automotive vehicles, particularly for vans
Banc pour véhicules automobiles, en particulier pour camionnettes

(30) Priorität: 23.01.1995 DE 19501743
(43) Veröffentlichungstag der Anmeldung: 24.07.1996
(73) Patentinhaber: DaimlerChrysler AG, 70567 Stuttgart (DE); Magna Seating Systems (Europe) GmbH, 97816 Lohr am Main (DE)
(72) Erfinder: Siebler, Helmut, D-70190 Stuttgart (DE); Tsilchorozidis, Georgios, Dipl.-Ing., D-70195 Stuttgart (DE); Mankiewicz, Dieter, D-97816 Lohr (DE); Mampe, Ulrich-Jürgen, D-97816 Lohr (DE); Kübert, Norbert, D-9816 Lohr (DE); Kroner, Wolfgang, D-63639 Flörsbachtal (DE); Ponath, Gerd, D-97816 Lohr (DE)

(56) Entgegenhaltungen:
- EP-A- 0 348 096
- EP-A- 0 397 333
- US-A- 4 229 040
- US-A- 4 422 691
- US-A- 4 773 693
- US-A- 5 282 662

## Beschreibung

Die Erfindung betrifft eine Sitzbank mit mindestens zwei Sitzplätzen für Kraftfahrzeuge, insbesondere für Kleintransporter, gemäß dem Oberbegriff des Patentanspruchs 1.

Bei einer bekannten Sitzbank (EP 03 48 096 A2) weist das Sitzoberstell zwei parallele Querrohre mit kreisförmigem Querschnitt auf, die von im Fahrzeugboden verankerbaren Sitzfüßen getragen werden. Jeder Sitzfuß hat zwei Beine, die durch eine Diagonalstrebe miteinander verbunden sind. Die Querrohre werden durch zwei oder mehrere voneinander beabstandeten, horizontalen Längsgliedern, sog. Holmen, die sich rechtwinklig zu den Querrohren erstrecken, miteinander verbunden. Ein Holm ist auf jeder Seite der Sitzbank und ein Holm zwischen einem Paar aneinander angrenzenden Sitzen der Sitzbank angeordnet. Das Sitzkissen ist von den Querrohren getragen, und die Rückenlehne ist in in den Holmen vorgesehenen Schwenklagern gehalten. Die äußeren Holme der Sitzbank tragen einstückig eine Armlehne.
Eine bekannte dreisitzige Sitzbank (EP 0 397 333 A2) hat ein einteiliges Sitzobergestell, das ein einteiliges Sitzkissenpolster und ein einteiliges Rücklehnenpolster aufnimmt und an den beiden quer zur Karosserielängsachse sich erstreckenden Seiten jeweils mit einem Sitzfuß starr verbunden ist, der rechtwinklig nach unten absteht und sich parallel zur Karosserielängsachse erstreckt. Die Sitzbank ist über die Sitzfüße im Karosserieboden herausnehmbar verankert, wozu im Karosserieboden ein Paar im Querabstand voneinander angeordnete Sitzfußaufnahmen vorgesehen sind. In jeder Sitzfußaufnahme ist ein Paar von im Längsabstand voneinander angeordneten Verriegelungsbolzen befestigt, die von einem Paar im Sitzfußende eingeformten U-förmigen Schlitzen übergriffen werden. Der vordere Schlitz im Sitzfußende erstreckt sich etwa horizontal und der hintere Schlitz etwa vertikal. Die Sitzbank wird durch Anheben der Rückenlehne etwas angewinkelt auf die beiden vorderen Verriegelungsbolzen aufgesetzt, so daß diese in die vorderen U-förmigen Schlitze hineinrutschen, und dann hinten abgesenkt, so daß sich nunmehr die hinteren Verriegelungsbolzen in die beiden hinteren U-förmigen vertikalen Schlitze einschieben. Eine einem hinteren U-förmigen Schlitz zugeordnete, am Sitzfuß schwenkbar gehaltene Klinke schwenkt danach mit einem Verriegelungshaken unter den hinteren Verriegelungsbolzen und verriegelt die Sitzbank am Karosserieboden. Zum Herausnehmen der Sitzbank muß zuerst die Klinke manuell geschwenkt werden, wonach der Sitz zunächst hinten von den Verriegelungsbolzen abgehoben werden kann, um dann anschließend von den vorderen Verriegelungsbolzen abgezogen zu werden.

Eine bekannte Sitzbank der eingangs genannten Art (US 4 422 691) für Fahrzeuge, wie Busse, Lastkraftwagen, Boote und Flugzeuge, weist einzelne Sitzplatzmodule auf, die jeweils aus zwei sitzplatzbegrenzenden L-förmigen Holmen, einer auf den kürzeren, vertikalen Schenkeln der beiden Holme befestigten, steifen Sitzplatte, einer auf den längeren, vertikalen Schenkeln der Holme befestigten, steifen Lehnenplatte und aus einer die beiden freien Enden der langen Schenkel miteinander starr verbindenden Quertraverse bestehen. Je nach gewünschter Sitzplatzzahl sind mehrere solcher Sitzplatzmodule nebeneinander aufgereiht, wobei die nebeneinanderliegenden Holme benachbarter Sitzplatzmodule mit geringem Abstand voneinander parallel verlaufen. Jeder Sitzplatzmodul ist mit den kürzeren Schenkeln seiner beiden L-förmigen Holme an zwei parallel zueinander verlaufenden Quertraversen befestigt, die sich über die gesamte Sitzbankbreite erstrecken und von zwei Sitzfüßen gehalten sind, die ihrerseits in dem Boden der Fahrzeugkarosserie verankert sind. Jede der beiden Quertraversen besitzt ein liegendes Doppel-C-Profil, auf dessen voneinander abgekehrten C-Öffnungen jeweils eine Flachleiste aufgeschweißt ist, die mit einer Mehrzahl von beabstandeten Gewindebohrungen versehen ist. In die Gewindebohrungen der oberen Flachleiste sind die kürzeren, vertikalen Schenkel der L-förmigen Holme und in die Gewindelöcher der unteren Flachleiste die beiden Sitzfüße jeweils mittels Gewindestiften eingeschraubt.

Bei Kleintransportern zum Befördern von Personen sind in der Regel mehrere Sitzbänke hintereinander angeordnet. Üblicherweise sind solche Kleintransporter durch eine seitliche Schiebetür zugänglich, so daß von der Türöffnung aus ein Zugang zu den hinteren Sitzbänken verbleiben muß. Je nach Kundenwunsch und Fahrzeugtyp werden solche Kleintransporter mit zwei oder drei Sitzbänken ausgestattet, die wahlweise zwei- oder dreisitzig sein können.

Der Erfindung liegt die Aufgabe zugrunde, eine Fahrzeug-Sitzbank der eingangs genannten Art konstruktiv so zu gestalten, daß sie je nach Bestuhlungswunsch mit unterschiedlichen Sitzplätzen aus vorgefertigten gleichen Einzelelementen baukastenartig zusammengesetzt werden kann. Darüber hinaus soll die Sitzbank leicht austauschbar sein, wobei die jedem Sitzplatz zuzuordnenden Sicherheitsgurte den schnellen Ein- und Ausbau nicht behindern dürfen, und soll im Crashfall die von den Personen auf die Sicherheitsgurte aufgebrachten Zugkräfte sicher in die Fahrzeugkarosserie einleiten.

Die Aufgabe ist erfindungsgemäß durch die kennzeichnenden Merkmale des Patentanspruchs 1 gelöst.

Die erfindungsgemäße Sitzbank wird unabhängig von der gewünschten Sitzbankbreite und Anzahl der Sitzplätze aus drei Grundelementen zusammengesetzt, nämlich aus den L-förmigen Holmen, den Querrohren und den Sitzfüßen. Die Anzahl der benötigten Holme und Sitzfüße richtet sich nach der gewünschten Sitzplatzzahl pro Sitzbank. Ein Einzelsitz erfordert zwei äußere Holme und zwei Sitzfüße. Bei einer zweisitzigen Sitzbank werden drei Holme und zwei Sitzfüße, bei einer dreisitzigen Sitzbank vier Holme und drei Sitzfüße benötigt. Darüber hinaus ist es auch möglich, die Sitzbank mit Sitzen unterschiedlicher Breite auszustatten, so daß das Modulsystem auch für unterschiedlich gewünschte Sitzplatzbreiten mit gleichem Vorteil angewendet werden kann. Eine unterschiedliche Sitzplatzbreite kann dadurch erforderlich werden, daß bei mehreren, z.B. dreisitzigen Sitzbänken wegen des erforderlichen Zugangs zu der hinteren Sitzbank die davor zur Türöffnung hin angeordneten ein oder zwei Sitzbänke schmaler gemacht, d.h. mit geringerer Sitzbankbreite ausgeführt, werden müssen. So lassen sich mit dem erfindungsgemäßen Baukastensystem für Sitzbänke kostengünstig wahlweise zweisitzige Sitzbänke und dreisitzige Sitzbänke mit gleicher Sitzplatzbreite und unterschiedlicher Sitzbankbreite sowie dreisitzige Sitzbänke und zweisitzige Sitzbänke mit gleicher Sitzbankbreite und unterschiedlicher Sitzplatzbreite realisieren.

Durch die jeweils einen Sitzplatz beidseitig begrenzenden L-förmigen Holme mit ihren bis zur Rückenlehnenoberkante reichenden langen Schenkeln lassen sich die Sicherheitsgurte und Gurtschlösser der jeweils einem Sitzplatz zugeordneten Sicherheitsgurtsysteme an den Holmen befestigen, so daß die von dem Sicherheitsgurtsystem aufgenommenen Kräfte über die Sitzfüße in den Karosserieboden eingeleitet werden. Die damit an der Sitzbank selbst befestigten Sicherheitsgurtsysteme behindern nicht den Ein- und Ausbau der Sitzbänke und stören, da sie mit den Sitzbänken entfernt werden, auch nicht die nach Sitzbankausbau entstehende Ladefläche.

Vorteilhafte Ausführungsformen der erfindungsgemäßen Sitzbank mit zweckmäßigen Weiterbildungen und Ausgestaltungen der Erfindung sind in den weiteren Patentansprüchen angegeben.

Gemäß einer vorteilhaften Ausführungsform der Erfindung sind die Holme und/oder die Sitzfüße jeweils aus zwei Halbschalen zu hohlen Kastenprofilen zusammengesetzt, wobei die beiden, vorzugsweise aus hochfestem Stahl gefertigten Halbschalen längs ihrer Stoßstellen durch eine Rollnaht miteinander verbunden sind. Dabei liegen die beiden Halbschalen an ihren Stoßstellen mit etwa rechtwinklig abgebogenen Flanschen aufeinander auf, die mittels eines Rollwerkzeugs gemeinsam zu der Rollnaht eingerollt sind.

Durch diese Ausbildung der Holme und Sitzfüße in Verbindung mit den hohlen Querrohren wird eine leichte Bauweise der Sitzbank bei hoher Steifigkeit erreicht. Dies stellt einen deutlichen Beitrag zur Gewichtsreduzierung des Fahrzeugs dar und beeinflußt positiv dessen Kraftstoffverbrauch. Die Rollnaht zur Verbindung der beiden Halbschalen ist eine formschlüssige Verbindung, die keine weiteren Arbeitsgänge erfordert. Die Fertigungsvorbereitung wird damit einfacher und die Fertigungszeit deutlich verkürzt. Die Form der Rollnaht und die Tatsache, daß sie ununterbrochen im Druckspannungsbereich von Holm und Sitzfuß verläuft, führen zu einer Erhöhung der Knicksicherheit. Auch ergibt die Rollnaht außen einen großen Radius, der ausreicht, die Anforderungen an den Kopfaufschlagbereich zu erfüllen. Dadurch und durch die Tatsache, daß sich nirgends scharfe Kanten ergeben, werden keine Nacharbeit und keine Abdeckteile für die Verbindungsstellen zwischen den beiden Halbschalen von Holm und Sitzfuß erforderlich. Der Sitzfuß zeigt ein ansprechendes Äußeres und braucht nicht verkleidet zu werden.

Gemäß einer vorteilhaften Ausführungsform der Erfindung ist an mindestens einem äußeren Holm nahe dem oberen Ende des langen Schenkels ein Halteseil zur Anbindung der Sitzbank an eine Karosserieseitenwand des Kraftfahrzeugs befestigt. Das Halteseil ist dabei bevorzugt als Schlaufe ausgebildet, die endseitig in einer bügelförmigen Stahlkausche aufgenommen ist, wobei die Stahlkausche auf einem in das obere Querrohr stirnseitig eingesteckten Gewindebolzen gehalten ist. Durch die flexible Wandanbindung der Sitzbank, die beim Ausbau der Sitzbank schnell und ohne Werkzeug gelöst werden kann, können Kräfte des Sicherheitsgurtes am wandnahen Sitz unmittelbar in die Karosserieseitenwand eingeleitet werden. Die Flexibilität der Wandanbindung läßt dabei Sitzbankbewegungen quer zur Karosserielängsachse zu. Der Gewindebolzen zur Aufnahme der Stahlkausche wird ohne vorbereitende Montagearbeiten in das stirnseitig offene Querrohr eingesteckt und daran verschweißt. Ist die Sitzbank so breit gemacht, daß sie sich von der einen Karosserieseitenwand bis zur anderen Karosserieseitenwand erstreckt, wird eine gleiche flexible Wandanbindung der Sitzbank an jeder Karosserieseitenwand vorgesehen.

Gemäß einer vorteilhaften Ausführungsform der Erfindung ist das obere Ende des langen Schenkels des die Wandanbindung tragenden äußeren Holms durch zwei spiegelbildlich ausgeführte Profile verstärkt. Diese Verstärkung ermöglicht es, den äußeren, unmittelbar an die Karosseriewand angrenzenden Sitzplatz der Sitzbank mit einem Dreipunkt-Sicherheitsgurtsystem auszustatten, wobei der schulterseitige Umlenkpunkt des Sicherheitsgurtes durch einen Gurtumlenker festgelegt wird, der an der Verstärkung befestigt ist.

Gemäß einer bevorzugten Ausführungsform der Erfindung ist zur Befestigung der Sitzfüße am Karosserieboden jedem Sitzfuß eine am Karosserieboden befestigte Fußaufnahme zugeordnet. Jede Fußaufnahme weist eine langgestreckte Befestigungsplatte mit zwei in Plattenlängsachse mit Abstand voneinander angeordneten Mulden und zwei jeweils in einer Mulde quer zur Plattenlängsachse ausgerichteten Verriegelungsbolzen auf. An der vom Sitzobergestell abgekehrten Stirnseite eines jeden Sitzfußes sind zwei im Abstand voneinander angeordnete Verriegelungshaken feststehend angeordnet, die von der Sitzfußstirnseite nach unten vorstehen und die Verriegelungsbolzen in den beiden Mulden jeweils hintergreifen. Ein manuell lösbarer Schnellverschluß, der mindestens einem Verriegelungshaken an einem Sitzfuß der Sitzbank zugeordnet ist, verriegelt den von dem Verriegelungshaken übergriffenen Verriegelungsbolzen gegen Austritt aus dem Verriegelunghaken und blockiert damit die Sitzbank gegen ungewolltes Ausheben aus ihren Fußaufnahmen.

Die Erfindung ist anhand von in der Zeichnung dargestellten Ausführungsbeispielen im folgenden näher beschrieben. Es zeigen:
- Fig. 1 und 2: jeweils eine schematische Darstellung eines Kleintransporters mit zwei Sitzbänken und Sicherheitsgurtsystemen in Seitenansicht (Fig. 1) und Draufsicht (Fig. 2),
- Fig. 3 und 4: jeweils eine gleiche Darstellung wie in Fig. 1 und 2 eines Kleintransporters mit drei Sitzbänken,
- Fig. 5: eine Vorderansicht einer zweisitzigen Sitzbank im Rohbau,
- Fig. 6: eine gleiche Darstellung wie in Fig. 5 einer dreisitzigen Sitzbank,
- Fig. 7: eine Seitenansicht der Sitzbank in Fig. 5 oder 6,
- Fig. 8 9 + 10: jeweils einen Schnitt längs der Linie VIII-VIII bzw. IX-IX bzw. X-X in Fig. 7,
- Fig.11: eine Seitenansicht einer Wandbefestigung der Sitzbank in Fig. 5 oder 6,
- Fig.12: eine Draufsicht der Wandverbindung in Fig. 11,
- Fig.13: ausschnittweise einen Längsschnitt eines Sitzfußes der Sitzbank mit Fußaufnahme im Karosserieboden des Kleintransporters,
- Fig.14 und 15: jeweils eine gleiche Darstellung wie in Fig. 13 für unterschiedliche Zuständen eines Schnellverschlusses zur Sitzbankverriegelung,
- Fig.16: einen Schnitt längs der Linie XVI-XVI in Fig. 13.

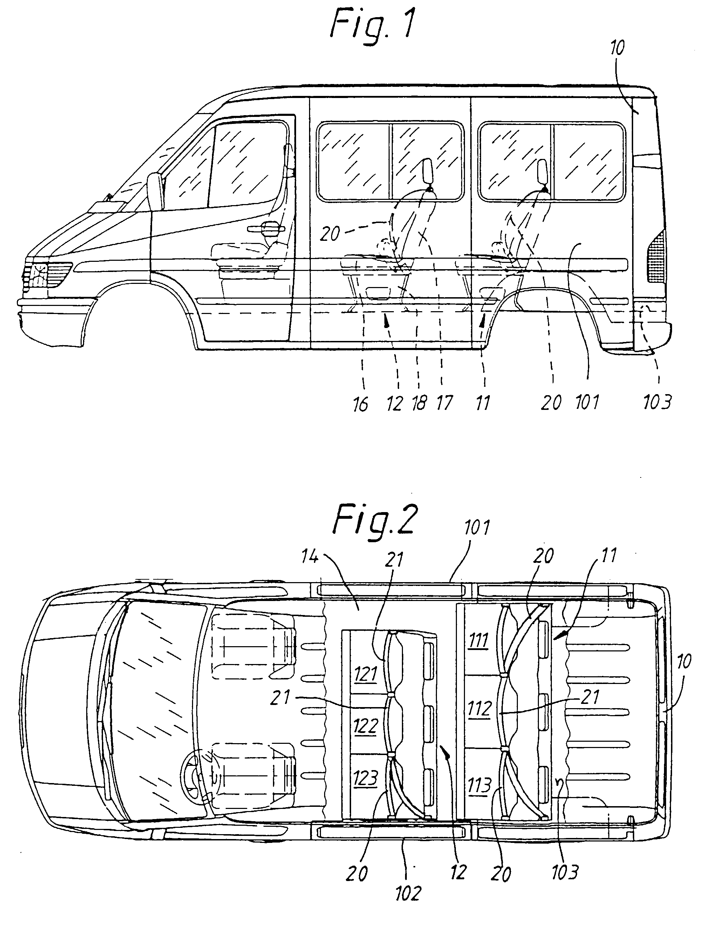

In Fig. 1 und 2 ist mit 10 die Karosserie eines Kleintransporters gekennzeichnet, der zum Personentransport mit zwei dreisitzigen Sitzbänken 11,12 ausgestattet ist. Der Zugang zu den Sitzbänken 11,12 erfolgt durch eine seitliche Schiebetür in der rechten Karosserieseitenwand 101. Die hintere Sitzbank 11 erstreckt sich mit ihren drei Sitzplätzen 111-113 von der einen Karosserieseitenwand 101 bis zur anderen Karosserieseitenwand 102, während die vordere Sitzbank 12 schmaler ausgebildet ist, so daß an ihrer rechten Seite ein Zugang 14 von der Türöffnung in der rechten Karosserieseitenwand 101 zu der hinteren Sitzbank 11 verbleibt. Die drei Sitzplätze 121-123 der vorderen Sitzbank 12 sind entsprechend schmaler ausgeführt als die Sitzplätze 111-113 der hinteren Sitzbank 11. Jeder Sitzplatz 111-113 bzw. 121-123 der Sitzbänke 11,12 ist mit einem Sicherheitsgurtsystem ausgestattet, wobei die Sicherheitsgurtsysteme für die Sitzplätze 112 sowie 121 und 122 als Zweipunktgurte 21 und die Sicherheitsgurtsysteme für die karosserieseitenwandnahen Sitzplätze 111 und 113 sowie 123 als Dreipunktgurte 20 ausgebildet sind. Die Sitzbänke 11,12 sind im Karosserieboden 103 verankert und können - wie noch später ausführlich erläutert wird - ohne Montagewerkzeug aus dem Kleintransporter herausgenommen werden, so daß die nunmehr freie Fläche als Ladefläche genutzt werden kann.

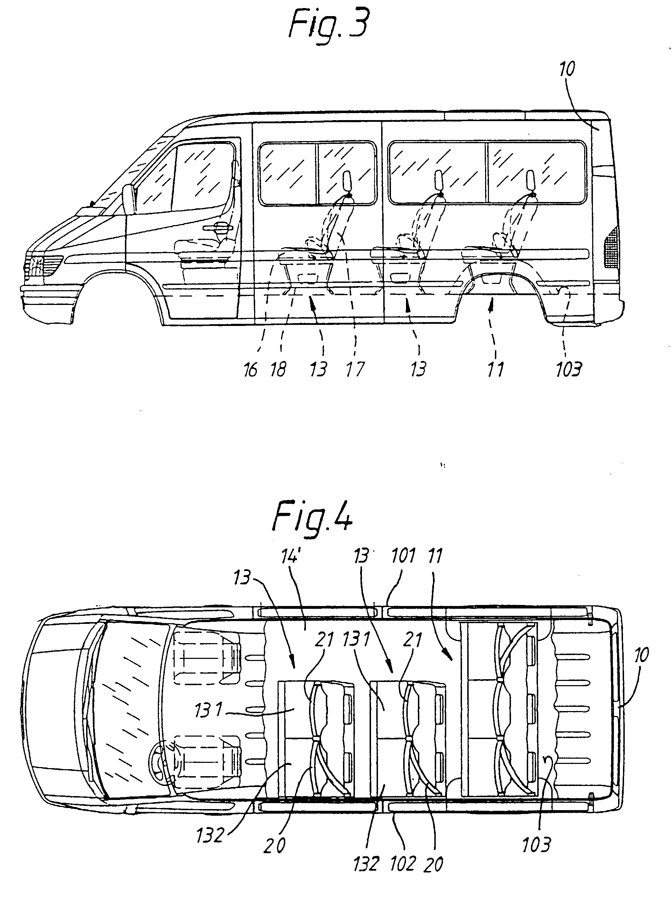

In Fig. 3 und 4 ist ein modifizierter Kleintransporter mit größerem Radstand und längerer Karosserie in Seitenansicht und Draufsicht skizziert. Dieser Kleintransporter ist mit insgesamt drei Sitzbänken ausgestattet. Die hintere Sitzbank 11 entspricht der Sitzbank des Kleintransporters in Fig. 1 und 2. Die beiden davorstehenden Sitzbänke 13 sind gleich und jeweils zweisitzig ausgebildet, wobei die beiden Sitzbänke 13 einerseits an die linke Karosserieseitenwand 102 anstoßen und andererseits an ihrer rechten Seite einen breiten Zugang 14' von der Türöffnung in der rechten Karosserieseitenwand 101 zu der mittleren Sitzbank 13 und der hinteren Sitzbank 11 freigeben. Die Breite der Sitzplätze 131,132 der Sitzbänke 13 ist gleich der Sitzbreite der Sitzplätze 111-113 der Sitzbank 11. Jeder karosserieseitenwandnahe Sitzplatz 132 der beiden Sitzbänke 13 ist wiederum mit einem Dreipunkt-Sicherheitsgurt 20 und jeder andere Sitzplatz 131 der beiden Sitzbänke 13 mit einem Zweipunkt-Sicherheitsgurt 21 ausgestattet. Die beiden Sitzbänke 13 sind in gleicher Weise wie die Sitzbank 11 im Karosserieboden 103 verankert. Alle Sitzbanktypen 11 - 13 sind nach dem Baukastenprinzip aus vorgefertigten Standardelementen zusammengesetzt und weisen ein Sitzobergestell 15 zur Aufnahme eines Sitzkissens 16 und einer Rückenlehne 17 sowie Sitzfüße 18 zur Verankerung des Sitzobergestells 15 am Karosserieboden 103 auf.

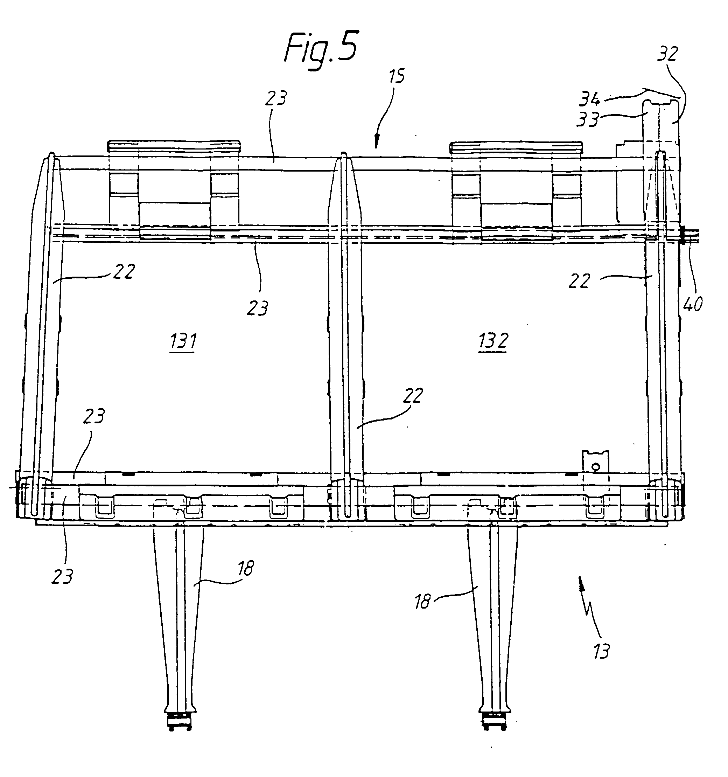

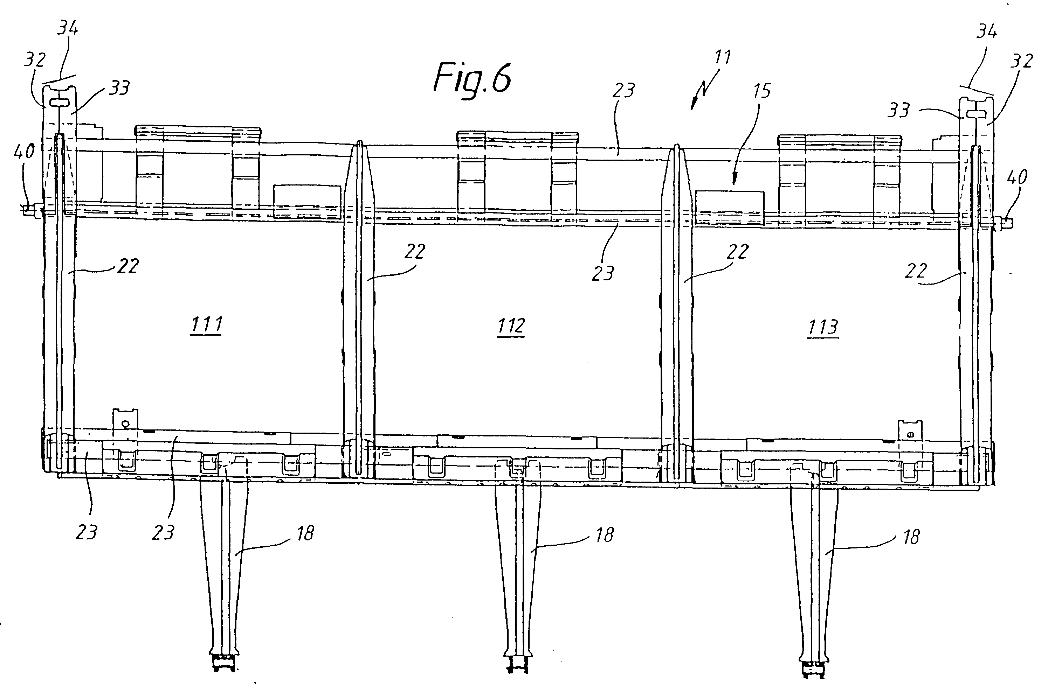

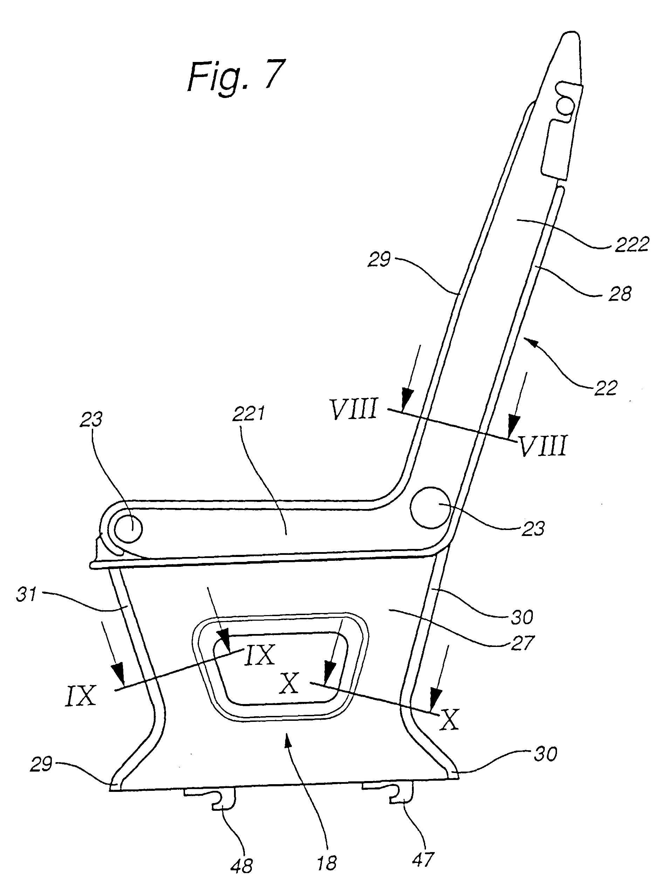

In Fig. 5 ist der konstruktive Aufbau der zweisitzigen Sitzbank 13 und in Fig. 6 der konstruktive Aufbau der dreisitzigen Sitzbank 11 im Rohbau, d.h. ohne Sitzkissen und Rückenlehne, dargestellt. Das Sitzobergestell 15 der Sitzbank 13 in Fig. 5 ist zusammengesetzt aus drei L-förmigen Holmen 22, vier Querrohren 23 und zwei Sitzfüßen 18. Die drei L-förmigen Holme 22 sind im Sitzplatzabstand voneinander angeordnet und begrenzen jeweils seitlich einen Sitzplatz 131 bzw. 132. Die L-Form der Holme 22 ist insbesondere aus Fig. 7 zu ersehen. Der kurze Schenkel 221 der Holme 22 erstreckt sich etwa waagrecht in Sitzkissentiefe, während der lange Schenkel 222 dazu um mehr als 90° geneigt ist und sich in Rückenlehnenhöhe erstreckt. Die insgesamt drei Holme 22 sind durch die vier Querrohre 23 starr miteinander verbunden, wobei zwei untere Querrohre 23 an den kurzen Schenkeln 221 der Holme 22 und zwei obere Querrohre 23 an den langen Schenkeln 222 der Holme 22 angebunden sind. Die beiden oberen Querrohre 23 sind im Parallelabstand voneinander geführt und am Ende der langen Schenkel 222 angeordnet, während die unteren Querrohre 23 jeweils im Parallelabstand voneinander am vorderen und hinteren Ende der kurzen Schenkel 221 der Holme 22 verlaufen. Wie aus Fig. 5 ersichtlich ist, sind die Querrohre 23 durch die Holme 22 hindurchgeführt und mit diesen verschweißt. Von den beiden Sitzfüßen 18 ist jeweils ein Sitzfuß 18 einem Sitzplatz 131 bzw. 132 zugeordnet und im Bereich zwischen zwei Holmen 22 an die beiden unteren Querrohre 23 rechtwinklig von diesen nach unten abstehend angesetzt und mit den Querrohren 23 verschweißt.

Die dreisitzige Sitzbank 11 gemäß Fig. 6 ist in der gleichen konstruktiven Weise aus den einzelnen Elementen des Baukastens oder Modulsystems zusammengesetzt, wobei entsprechend dem einen vermehrten Sitzplatz 113 insgesamt vier Holme 22 und drei Sitzfüße 18 vorhanden sind. Die vier im Parallelabstand voneinander angeordneten Holme 22 sind wiederum durch vier Querrohre 23 starr miteinander verbunden und die insgesamt drei Sitzfüße 18 sind jeweils im Bereich zwischen zwei Holmen 22 an die beiden unteren Querrohre 23 rechtwinklig angesetzt und mit diesen verschweißt.

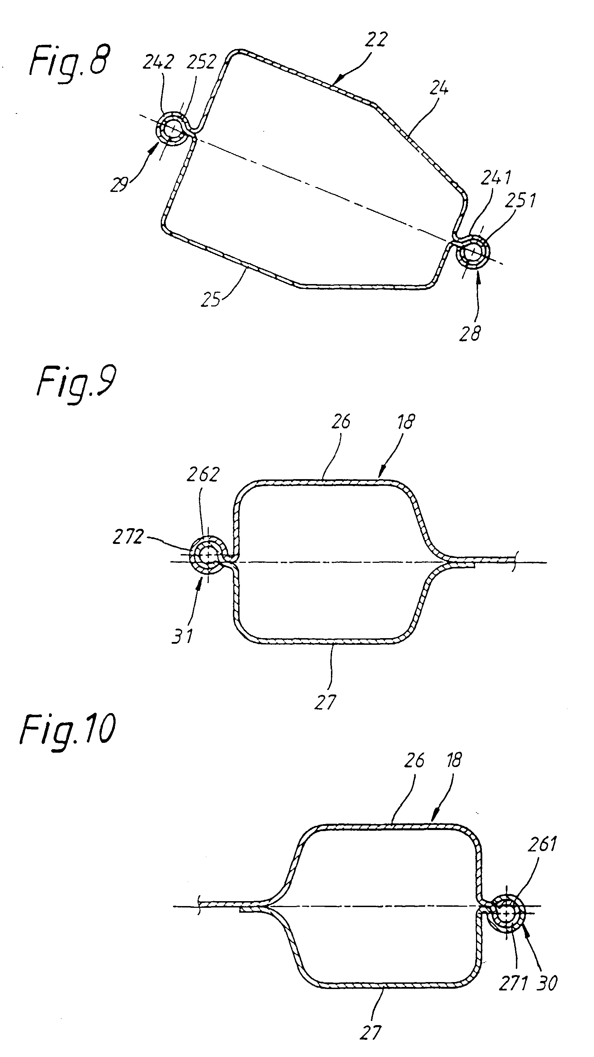

Zur Erzielung einer leichten und steifen Rohbaukonstruktion der Sitzbänke 11,13 sind, wie dies in den Schnittdarstellungen in Fig. 8 - 10 dargestellt ist, die Holme 22 und die Sitzfüße 18 jeweils aus zwei Halbschalen 24,25 bzw. 26,27 zu hohlen Kastenprofilen zusammengesetzt. Die beiden aus hochfestem Stahl gefertigten Halbschalen 24,25 bzw. 26,27 liegen an ihren Stoßstellen mit etwa rechtwinklig abgebogenen Flanschen 241 und 251, 242 und 252 bzw. 261 und 271, 262 und 272 aufeinander auf, wobei die Flanschpaare mittels eines Rollwerkzeugs gemeinsam zu einer Rollnaht 28 und 29 respektive 30 und 31 eingerollt sind. Durch diese Rollnähte 28 - 31 wird am Holm 22 und am Sitzfuß 18 eine formschlüssige Verbindung der beiden Halbschalen 24,25 bzw. 26,27 erreicht, die keine weiteren Arbeitsvorgänge notwendig macht. Der Aufwand an Vorrichtungen und Fertigungszeit ist geringer als bei sog. stoffschlüssigen Verbindungen, wie sie durch Punktschweißen und ähnliches hergestellt werden. Durch die Materialanhäufung in der Rollnaht wird das Widerstandsmoment gegen Biegung erhöht und eine hohe Knicksicherheit gewährleistet.

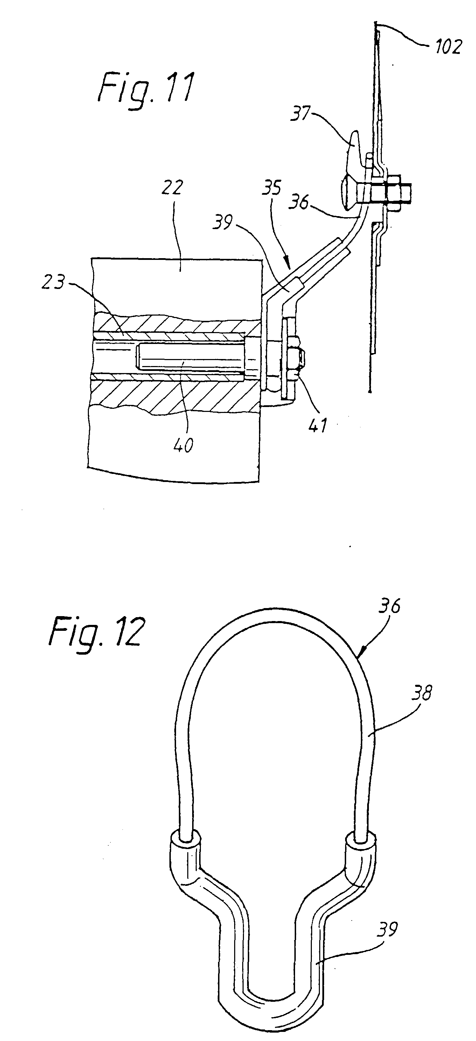

Bei den Sitzbänken 11,13 in Fig. 5 und 6 ist der äußere Holm 22, der unmittelbar einer Karosserieseitenwand 101,102 mit geringem Abstand benachbart ist, am oberen Ende seines langens Schenkels 222 mechanisch verstärkt, wozu zwei spiegelbildlich ausgeführte Verstärkungsprofile 32,33 auf das Ende des langen Schenkels 222 aufgesetzt und mit diesem verschweißt sind. An den Verstärkungsprofilen 32,33 ist ein schematisch angedeuteter Gurtumlenker 34 für den Dreipunkt-Sicherheitsgurt 20 befestigt. Bei der zweisitzigen Sitzbank 13 gemäß Fig. 5 ist nur der linke äußere Holm 22 mit Verstärkungsprofilen 32,33 versehen, während bei der dreisitzigen Sitzbank 11 gemäß Fig. 6, die von der rechten Karosserieseitenwand 101 bis zur linken Karosserieseitenwand 102 reicht, beide äußeren Holme 22 mit Verstärkungsprofilen 32,33 und jeweils einem Gurtumlenker 34 versehen sind. Zur Einleitung von Gurtkräften in die Karosserieseitenwand 101,102 ist jeweils der seitenwandnahe äußere Holm 22 an die entsprechende Karosserieseitenwand 101 bzw. 102 angebunden. Zum Ausgleich von Toleranzen zwischen Fahrzeugboden 103 und Karosserieseitenwand 101,102, zwischen Sitzbank 11,13 und Fahrzeugkarosserie 10 und zur Vermeidung von Geräuschentwicklung beim Auftreten von Seitenwandschwingungen im Fahrbetrieb ist die Wandanbindung 35, die in Fig. 11 und 12 dargestellt ist, flexibel ausgeführt. Die Wandanbindung 35 besteht aus einem am Holm 22 festgelegten Halteseil 36 und einem an der Karosserieseitenwand 101 bzw. 102 befestigten Haken 37. Das Halteseil 36 ist als Schlaufe 38 ausgebildet, die endseitig in einer bügelförmigen Stahlkausche 39 aufgenommen ist (Fig. 12). Die Stahlkausche 39 umgreift mit ihren beiden Schenkeln einen Gewindebolzen 40 und ist mit einer Gewindemutter 41 auf dem Gewindebolzen 40 kraftschlüssig festgelegt. Der Gewindebolzen 40, der auch in Fig. 5 und 6 zu sehen ist und seitlich von dem jeweils äußersten Holm 22 absteht, ist in das offene Stirnende des einen oberen Querrohrs 23 eingesteckt und mit den Verstärkungsprofilen 32,33 verschweißt (Fig. 11). Die Schenkelenden der Stahlkausche 39, welche die Stahlseil-Schlaufe 38 durch Preßverbindung kraftschlüssig hält, sind so abgewinkelt, daß sie von dem äußeren Holm 22 wegweisen. Diese Abwinklung hat den Vorteil, daß bei der Montage der Sitzbank 11,13 die Schlaufe 38 mit großer Wahrscheinlichkeit selbsttätig hinter den Haken 37 an der Karosserieseitenwand 101 bzw. 102 greift. Der vorzugsweise aus Aluminium gefertigte Haken 37 wird mittels Schrauben an der Karosserieseitenwand 101 bzw. 102 befestigt und leitet die über den Holm 22, den Gewindebolzen 40 und das Halteseil 36 übertragenen Gurtkräfte an die Fahrzeugkarosserie 10 weiter.

Von den jedem Sitzplatz 111 - 113 bzw. 131 und 132 der Sitzbänke 11,13 zugeordneten Sicherheitgurtsystemen (Dreipunkt-Sicherheitsgurt 20 bzw. Zweipunkt-Sicherheitsgurt 21) ist jeweils das Gurtende an dem einen und das Gurtschloß an dem anderen der beiden jeweils einen Sitzplatz begrenzenden Holme 22 befestigt, so daß jeweils die in Fig. 5 und 6 mittleren Holme 22, die jeweils zwei Sitzplätzen 131 und 132 bzw. 111 und 112 bzw. 112 und 113 zugeordnet sind, jeweils Befestigungsvorrichtungen für ein Gurtende und ein Gurtschloß von zwei verschiedenen Sicherheitsgurtsystemen tragen. Die Befestigungsvorrichtungen sind der Übersichtlickeit halber nicht dargestellt.

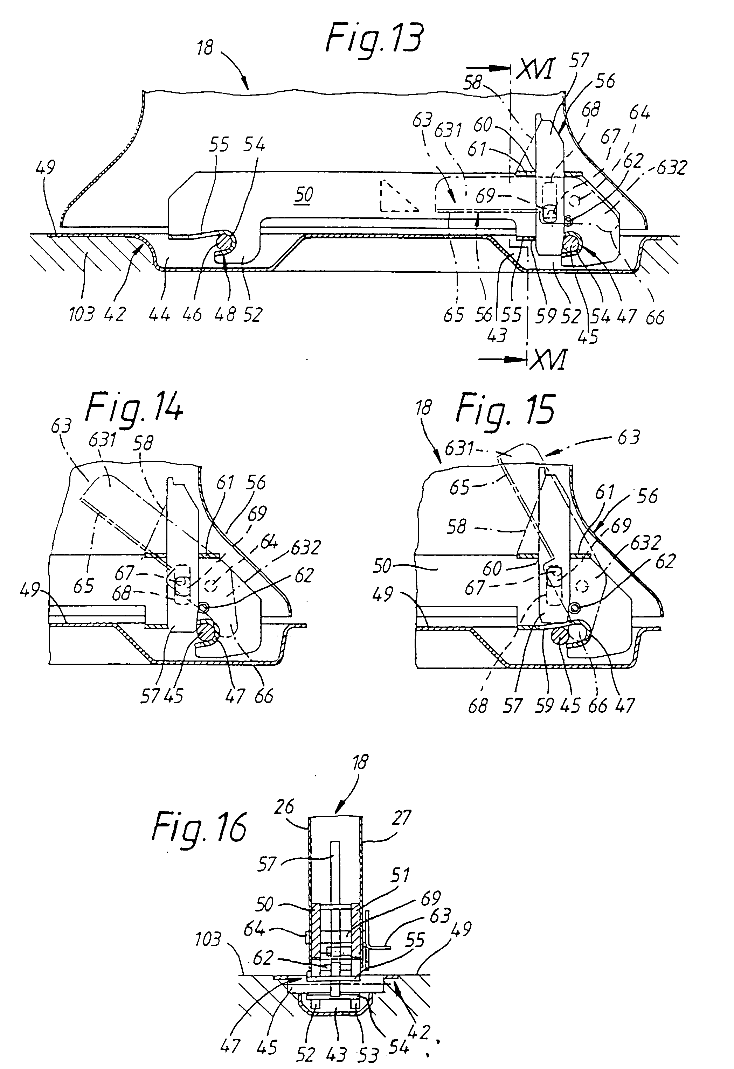

Zur Befestigung der Sitzfüße 18 einer jeden Sitzbank 11 - 13 am Karosserieboden 103 ist jedem Sitzfuß 18 eine am Karosserieboden 103 befestigte Fußaufnahme 42 zugeordnet. Eine solche Fußaufnahme 42 ist in Fig. 13 im Längsschnitt dargestellt. Jede Fußaufnahme 42 weist eine langgestreckte Befestigungsplatte 49 mit zwei in Plattenlängsachse mit Abstand voneinander angeordneten Vertiefungen oder Mulden 43,44 auf, in welchen jeweils ein quer zur Plattenlängsachse sich erstreckender Verriegelungsbolzen 45 bzw. 46 befestigt ist, wobei jeder Verriegelungsbolzen 45,46 in den Muldenseitenwänden eingeschweißt ist. Im Stirnende eines jeden Sitzfußes 18 sind zwei Verriegelungshaken 47,48 im Längsabstand voneinander angeordnet, die über die Unterkante des Sitzfußes 18 überstehen, so daß bei auf dem Karosserieboden 103 aufsitzendem Sitzfuß 18 die Verriegelungshaken 47,48 in die Mulden 43,44 hineinragen und dort die Verriegelungsbolzen 45,46 auf deren vom Sitzfuß 18 abgekehrten Seite übergreifen. Wie aus Fig. 13 und der Schnittdarstellung in Fig. 16 ersichtlich ist, wird jeder Verriegelungshaken 47,48 von zwei, jeweils von der Unterkante zweier im Parallelabstand sich erstreckender, kongruenter Hakenleisten 50,51 damit einstückig vorspringenden Hakenprofilen 52,53 sowie einem diese beiden Hakenprofile 52,53 miteinander verbindenden Querblech 54 gebildet. Das Querblech 54 ist der Kontur der Hakenprofile 52,53 nachgeformt und weist einen sich von Hakenleiste 50 zu Hakenleiste 51 erstreckenden Quersteg 55 auf, der zum Hakengrund hin spitzwinklig ansteigend ausgebildet ist. Wird die Sitzbank mit ihren Sitzfüßen 10 vertikal in die Fußaufnahmen 42 eingesetzt, so trifft der Quersteg 55 der Verriegelungshaken 47,48 auf den jeweiligen Verriegelungsbolzen 45,46 auf. Durch die Schrägstellung der Querstege 55 wird dabei bewirkt, daß durch das Gewicht der Sitzbank die Verriegelungshaken 47,48 auf den Verriegelungsbolzen 45,46 nach vorn gleiten und somit die Verriegelungsbolzen 45,46 weitgehend selbsttätig in den-Grund der Verriegelungshaken 47,48 hineingleiten. Dem hinteren Verriegelungshaken 47 ist ein manuell lösbarer Schnellverschluß 56 zugeordnet, der - wie in Fig. 13 dargestellt ist - den hinteren Verriegelungsbolzen 45, der in dem hinteren Verriegelungshaken 47 einliegt, gegen Austritt aus dem Verriegelungshaken 47 sperrt. Bei einer Sitzbank mit mehreren Sitzfüßen 18 genügt es dabei, wenn an einem Sitzfuß 18 ein solcher Schnellverschluß 56 vorgesehen ist. Der Schnellverschluß 56 weist einen vertikal verschieblich geführten Stößel 57 auf, der unter der Wirkung einer Rückstellfeder 58 sich vor die Öffnung des Verriegelungshakens 47 schiebt. Dabei tritt der Stößel 57 durch eine Durchtrittsöffnung 59 im Quersteg 55 des Querbleches 54 hindurch. Bei der vertikalen Verschiebebewegung wird der Stößel 57 einerseits von einer Führungsöffnung 60 in einem Verbindungsblech 61 sowie von einem zwischen den Hakenleisten 50,51 sich erstreckenden Führungsbolzen 62 geführt. Das Verbindungsblech 61 verbindet die beiden Hakenleisten 50,51 miteinander und ist auf deren Oberkante, dem Querblech 54 des Verriegelungshakens 47 gegenüberliegend, mit diesem verschweißt. Der Führungsbolzen 62 ist im Vertikalabstand von dem Querblech 61 angeordnet.

Weiterhin gehört zum Schnellverschluß 56 ein Handhebel 63, der als zweiarmiger Schwenkhebel ausgebildet ist und auf einem zwischen den beiden Hakenleisten 50,51 sich erstreckenden Bolzen 64 schwenkbar gehalten ist. Wie aus Fig. 16 hervorgeht, ist der Handhebel 63 auf der äußeren Wand des Sitzfußes 18, die von der Halbschale 27 gebildet ist, angeordnet. Der eine Hebelarm 631 des Handhebels 63 trägt dabei eine senkrecht abgewinkelte Griffplatte 65, während der andere Schwenkarm 632 des Handhebels 63 eine Verschiebenase 66 trägt, die so angeordnet ist, daß sie beim Schwenken des Handhebels 63 in Fig. 13 im Uhrzeigersinn gegen den Verriegelungsbolzen 45 anschlägt, und zwar auf dessen von dem Stößel 57 abgekehrten Rückseite. Vom Schwenkarm 631 des Handhebels 63 steht rechtwinklig ein Mitnahmestift 67 ab, der durch ein Langloch 68 in der Halbschale 27 des Sitzfußes 18 hindurchragt und in eine Mitnahmeöffnung 69 im Stößel 57 hineingreift. Über den Mitnahmestift 67 und der Mitnahmeöffnung 69 wird durch Schwenken des Handhebels 63 in Fig. 13 im Uhrzeigersinn der Stößel 57 gegen die Kraft der Rückstellfeder 68 nach oben geschoben und dadurch die Öffnung des hinteren Verriegelungshakens 47 zum Austritt des Verriegelungsbolzens 45 freigegeben.

Zum Ausbau einer der Sitzbänke 11 - 13 aus dem Kleintransporter ist zunächst der Schnellverschluß 56 an der Sitzbank zu lösen. Hierzu wird der Handhebel 63 in Fig. 13 im Uhrzeigersinn geschwenkt. Die nacheinander von dem Schwenkhebel 63 und dem Schnellverschluß 56 insgesamt eingenommenen Positionen sind in der genauen Reihenfolge in Fig. 14 und 15 dargestellt. Durch Schwenken des Handhebels 63 wird zunächst der Stößel 57 in seinen Führungen 60 und 62 vertikal nach oben bewegt und dabei die Rückstellfeder 58 gespannt. Wenn der Stößel 57 von dem Verriegelungsbolzen 45 abgezogen ist, kommt die Verschiebenase 66 am Handhebel 63 zur Anlage an den Verriegelungsbolzen 45 (Fig. 14). Bei weiterem Schwenken des Handhebels 63 drückt die Verschiebenase 66 gegen den Verriegelungsbolzen 45, wodurch erreicht wird, daß die Sitzbank insgesamt etwas nach hinten bewegt wird und dabei die Verriegelungshaken 47,48 von den Verriegelungsbolzen 45,46 abgeschoben werden. Sind die Verriegelungsbolzen 45,46 vollständig aus ihren zugeordneten Verriegelungshaken 47,48 ausgeschoben, ist gleichzeitig die Verschiebenase 66 in den hinteren Verriegelungshaken 47 eingeschwenkt. In dieser Schwenkstellung (Fig. 15) rastet der Handhebel 63 in eine hier nicht dargestellte Rastung am Sitzfuß 18 ein. Die nunmehr nicht mehr gesicherte Sitzbank kann durch leichtes Nachhintenziehen aus den Fußaufnahmen 42 herausgenommen und entfernt werden.

Das Einsetzen der Sitzbank 11 - 13 erfolgt in umgekehrter Weise. Die Sitzbank wird in die zugeordneten Fußaufnahmen 42 eingesetzt, wobei sich der Schnellverschluß 56 in der in Fig. 15 dargestellten Position befindet. Die erste Berührung des Sitzfußes 18 mit den Verriegelungsbolzen 45,46 erfolgt über die schräg gestellten Querbleche 54 an den Verriegelungshaken 47,48. Aufgrund des Eigengewichtes rutscht die Sitzbank nach vorn. Der Verriegelungsbolzen 45 drückt gegen die Verschiebenase 66 und zwingt den Handhebel 63 in Fig. 15 gegen Uhrzeigersinn zu schwenken, wodurch der Verriegelungshebel 63 aus seiner Rastung gedrückt wird und die Rückstellfeder 58 den Stößel 57 vertikal nach unten zieht. Über die Mitnahmeöffnung 69 und den Mitnahmebolzen 67 wird der Handhebel 63 weiter entgegen Uhrzeigersinn geschwenkt (Fig. 14), wobei die Verschiebenase 66 den hinteren Verriegelungshaken 47 vollständig freigibt. Sind die Verriegelungsbolzen 45,46 vollständig in die Verriegelungshaken 47,48 eingedrungen, so schiebt sich unter der Wirkung der Rückstellfeder 48 der Stößel 57 vor den hinteren Verriegelungsbolzen 45, und der Handhebel 63 nimmt seine in Fig. 13 dargestellte Verriegelungsposition ein.

## Patentansprüche

1. Sitzbank mit mindestens zwei Sitzplätzen für Kraftfahrzeuge, insbesondere für Kleintransporter, mit einem Sitzobergestell (15) zur Aufnahme von Sitzkissen (16) und Rückenlehne (17), das aus mehreren, sitzplatzbegrenzenden L-förmigen Holmen (22) mit jeweils einem etwa waagrecht in Sitzkissentiefe sich erstreckenden kurzen Schenkel (221) und einem dazu um mehr als 90° geneigt in Rückenlehnenhöhe sich erstreckenden langen Schenkel (222) und aus mehreren, quer zu den Holmen (22) verlaufenden, die Holme (22) starr miteinander verbindenden Quertraversen besteht, von denen mindestens zwei untere Quertraversen an den kurzen Schenkeln (221) der Holme (22) angebunden sind, und mit am Karosserieboden des Kraftfahrzeugs verankerbaren, an den mindestens zwei unteren Quertraversen befestigten Sitzfüßen (18),
**dadurch gekennzeichnet,**
daß alle Quertraversen als über die Sitzbankbreite sich erstreckende Querrohre (23) ausgeführt sind und mindestens ein oberes Querrohr (23) die langen Schenkel der Holme (22) miteinander verbindet, daß die einzelnen Holme (22) jeweils in Sitzplatzbreite voneinander angeordnet sind und daß jedem Sitzplatz (111-113 bzw. 121-123 bzw. 131,132) ein Sitzfuß (18) zugeordnet ist, der jeweils im Bereich zwischen zwei Holmen (22), vorzugsweise mittig, angeordnet ist.

2. Sitzbank nach Anspruch 1,
**dadurch gekennzeichnet,**
daß die Holme (22) und/oder die Sitzfüße (18) jeweils aus zwei, vorzugsweise aus hochfestem Stahl hergestellten, Halbschalen (24,25 bzw. 26,27) zusammengesetzt sind und daß die beiden Halbschalen (24,25 bzw. 26,27) längs ihrer Stoßstellen durch eine Rollnaht (28,29 bzw. 30,31) miteinander verbunden sind.

3. Sitzbank nach Anspruch 2,
**dadurch gekennzeichnet,**
daß die beiden Halbschalen (24,25 bzw. 26,27) an ihren Stoßstellen mit etwa rechtwinklig abgebogenen Flanschen (241,242,251,252 bzw. 261,262,271,272) aufeinander aufliegen, die mittels eines Rollwerkzeugs gemeinsam zu der Rollnaht (28,29 bzw. 30,31) eingerollt sind.

4. Sitzbank nach einem der Ansprüche 1 - 3,
**dadurch gekennzeichnet,**
daß an mindestens einem äußeren Holm (22) nahe dem oberen Ende des langen Schenkels (222) ein Halteseil (36) zur Anbindung an eine Karosserieseitenwand (101) des Kraftfahrzeugs befestigt ist.

5. Sitzbank nach Anspruch 4,
**dadurch gekennzeichnet,**
daß das Halteseil (36) als Schlaufe (38) ausgebildet ist, die endseitig in einer bügelförmigen Stahlkausche (39) kraftschlüssig aufgenommen ist und daß die Stahlkausche (39) auf einem in ein oberes Querrohr (23) stirnseitig eingesteckten Gewindebolzen (40) gehalten ist.

6. Sitzbank nach Anspruch 5,
**dadurch gekennzeichnet,**
daß die Schenkelenden der beiden Bügelschenkel der Stahlkausche (39) von dem äußeren Holm (22) wegweisend abgewinkelt sind.

7. Sitzbank nach einem der Ansprüche 1 - 6,
**dadurch gekennzeichnet,**
daß das obere Ende des langen Schenkels (222) mindestens eines äußeren Holms (22) durch zwei vorzugsweise spiegelbildlich ausgeführte Verstärkungsprofile (32,33) verstärkt ist und daß an dem verstärkten Schenkelende ein Gurtumlenker (34) für einen Dreipunkt-Sicherheitsgurt (20) befestigt ist.

8. Sitzbank nach Anspruch 5 und 7,
**dadurch gekennzeichnet,**
daß der Gewindebolzen (40) mit mindestens einem Verstärkungsprofil (32) verschweißt ist.

9. Sitzbank nach einem der Ansprüche 1 - 8,
**dadurch gekennzeichnet,**
daß an jedem Holm (22) jeweils eine Befestigungsvorrichtung für das Gurtende und/oder für ein Gurtschloß eines Sicherheitsgurtsystems vorgesehen ist und daß das Sicherheitsgurtsystem für den wandnahen Sitzplatz (111,113,123 bzw. 132) mit verstärktem äußeren Holmschenkelende als Dreipunkt-Sicherheitsgurt (20) und das Sicherheitsgurtsystem für die übrigen Sitzplätze (112,122 bzw. 131) als Zweipunkt-Sitzgurt (21) ausgebildet ist.

10. Sitzbank nach einem der Ansprüche 1 - 9,
**dadurch gekennzeichnet,**
daß zur Befestigung der Sitzfüße (18) am Karosserieboden (103) jedem Sitzfuß (18) eine am Karosserieboden (103) befestigte Fußaufnahme (42) zugeordnet ist, daß jeder Fußaufnahme (42) eine langgestreckte Befestigungsplatte (49) mit zwei in Plattenlängsachse mit Abstand voneinander angeordneten Mulden (43,44) und zwei jeweils in einer Mulde (43,44) quer zur Plattenlängsachse angeordneten Verriegelungsbolzen (45,46) aufweist, daß an der vom Sitzobergestell (15) abgekehrten Stirnseite des Sitzfußes (18) zwei im Abstand voneinander angeordnete, feststehende Verriegelungshaken (47,48) vorstehen, die die Verriegelungsbolzen (45,46) hintergreifen, und daß mindestens einem Sitzfuß (18) ein manuell lösbarer Schnellverschluß (56) zugeordnet ist, der den von einem Verriegelungshaken (47) übergriffenen Verriegelungsbolzen (45) gegen Austritt aus dem Verriegelungshaken (47) sperrt.

11. Sitzbank nach Anspruch 10,
**dadurch gekennzeichnet,**
daß jeder Verriegelungshaken (47,48) von zwei jeweils von der Unterkante zweier im Parallelabstand sich erstreckender, kongruenter Hakenleisten (50,51) damit einstückig vorspringenden Hakenprofilen (52,53) und einem diese miteinander verbindenden Querblech (54) gebildet ist, das einen unter einem spitzen Winkel zum hinteren Hakenleistenende ansteigenden Quersteg (55) aufweist.

12. Sitzbank nach Anspruch 10 oder 11,
**dadurch gekennzeichnet,**
daß der Schnellverschluß (56) einen vertikal geführten, verschieblichen Stößel (57), der unter der Wirkung einer Rückstellfeder (58) sich vor die Hakenöffnung schiebt, sowie einen Handhebel (63) zum Verschieben des Stößels (57) gegen die Rückstellfeder (58) aufweist und daß im Quersteg (55) des dem Verriegelungshaken (47) zugehörigen Querblechs (54) eine Durchtrittsöffnung (59) für den Stößel (57) vorgesehen ist.

13. Sitzbank nach Anspruch 12,
**dadurch gekennzeichnet,**
daß der Handhebel (63) an mindestens einer der Hakenleiste (50,51) schwenkbar befestigt ist und daß der Handhebel (63) einen quer abstehenden Mitnahmestift (67) trägt, der formschlüssig in eine Mitnahmeöffnung (69) im Stößel (57) zu dessen Mitnahme eingreift.

14. Sitzbank nach Anspruch 13,
**dadurch gekennzeichnet,**
daß der Handhebel (63) als zweiarmiger Schwenkhebel ausgebildet ist, dessen eines Schwenkarmende eine Verschiebenase (66) trägt, die so ausgebildet ist, daß sie beim Schwenken des Handhebels (63) in dessen Entriegelungsstellung an dem Verriegelungsbolzen (45) auf dessen dem Grund des Verriegelungshakens (47) zugekehrten Seite anschlägt.

15. Sitzbank nach einem der Ansprüche 12 - 14,
**dadurch gekennzeichnet,**
daß die beiden Hakenleisten (50,51) durch ein Verbindungsblech (61) miteinander verbunden sind, das auf der Oberkante der beiden Hakenleisten (50,51) befestigt ist und eine Führungsöffnung (60) für den Stößel (57) aufweist, und daß im Vertikalabstand von dem Verbindungsblech (61) ein am Stößel (57) gleitender Führungsbolzen (62) zwischen den Hakenleisten (50,51) gehalten ist.

## Claims

1. Bench seat with at least two seating places for motor vehicles, in particular small passenger vehicles, having a seat frame (15) for receiving seat cushion (16) and backrest (17) which consists of several L-shaped spars (22) bounding seating places, each having a short leg (221) extending horizontally across the seat cushion depth and a long leg (222) extending at an angle of more than 90° relative thereto, and several cross-beams which run transversely to the spars (22) and rigidly connect the spars (22) to one another, at least two bottom cross beams being joined to the short legs (221) of the spars (22), and seat feet (18) anchorable on the bodywork floor of the vehicle attached to the at least two bottom cross beams,
**characterised in that**
all cross beams are provided as cross bars (23) extending across the bench seat width, at least a top cross bar (23) connecting the long legs of the spars (22) to one another, in that the individual spars (22) are arranged respectively apart from one another by a seating place width and a seat foot (18) is provided for each seating place (111-113 or 121-123 or 131, 132) disposed respectively in the region between two spars (22), preferably in the middle.

2. Bench seat as claimed in claim 1,
**characterised in that**
the spars (22) and/or the seat feet (18) are assembled respectively from two half-shells (24, 25 or 26, 27), preferably made from high-strength steel, and the two half-shells (24, 25 or 26, 27) are joined to one another by a rolled seam (28, 29 or 30, 31) at their jointing points.

3. Bench seat as claimed in claim 2,
**characterised in that**
the two half-shells (24, 25 or 26, 27) are laid one on top of the other at their jointing points by flanges (241, 242, 251, 252, or 261, 262, 271, 272) bent back more or less at a right angle, which are rolled together by a rolling tool to form the rolled the rolled seam (28, 29 or 30, 31).

4. Bench seat as claimed in one of claims 1 - 3,
**characterised in that**
a retaining cord (36) is attached to ac least an outer spar (22) close to the top end of the long leg (222) to provide a fastening arrangement on the bodywork side wall (101) of the motor vehicle.

5. Bench seat a claimed in claim 4,
**characterised in that**
the retaining cord (36) is provided as a loop (38) anchored by its ends in a friction lock in a U-shaped steel thimble (39) and the steel thimble (39) is retained on a threaded bolt (40) inserted in a top cross bar (23) from the end face.

6. Bench seat as claimed in claim 5,
**characterised in that**
the leg ends of the two U-legs of the steel thimble (39) are angled so as to point away from the outer spar (22).

7. Bench seat as claimed in one of claims 1 - 6,
**characterised in that**
the top end of the long leg (222) of at least an outer spar (22) is reinforced, preferably by two reinforcing sections (32, 33) designed to be symmetrical in mirror image, and a belt pulley (34) for a three-point safety belt (20) is fastened to the reinforced leg end.

8. Bench seat as claimed in claim 5 and 7,
**characterised in that**
the threaded bolt (40) is welded to at least one reinforcing section (32).

9. Bench seat as claimed in one of claims 1 - 8,
**characterised in that**
a fastening device for the belt and/or a belt lock of a safety belt system is provided respectively on every spar (22) and the safety belt system for the seating place (111, 113, 123 or 132) next to the wall with reinforced outer spar leg ends is provided as a three-point safety belt (20) and the safety belt system for the other seating places (112, 122 or 131) is provided as a two-point seat belt (21).

10. Bench seat as claimed in one of claims 1 - 9,
**characterised in that**
in order to anchor the seat feet (18) onto the bodywork floor (103), each seat foot (18) is assigned a foot bearing (42), each foot bearing (42) having a longitudinally extending mounting place (49) with two recesses (43, 44) spaced at a distance apart in the longitudinal axis of the plate and two locking bolts (45, 46) arranged respectively in a recess (43, 44) transversely to the longitudinal axis of the plate, in that two stationary locking hooks (47, 48) spaced at a distance apart from one another project from the end face of the seat foot (18) remote from the seat frame (15) and engage behind the locking bolts (45, 46), and in that a manually releasable fast-closing lock (56) is provided for at least one seat foot (18) which locks the locking bolt (45) engaged by a locking hook (47) to prevent it from working loose from the locking hook (47).

11. Bench seat as claimed in claim 10,
**characterised in that**
every locking hook (47, 48) is made up of two forward-projecting hook sections (52, 53) integral with two congruent hook side plates (50, 51) extending from the bottom edge respectively at a parallel distance, and a cross plate (54) connecting the latter to one another having a cross piece (55) rising at an acute angle to the rear hook side plate.

12. Bench seat as claimed in claim 10 or 11,
**characterised in that**
the fast-closing lock (56) has a vertically guided slidable ram (57), which is pushed in front of the hook opening under the action of a return spring (58) and a hand lever (63) for pushing the ram (57) against the return spring (58), an orifice (59) for the ram (57) being provided in the cross piece (55) of the cross plate (54) assigned to the locking hook (47).

13. Bench seat as claimed in claim 12,
**characterised in that**
the hand lever (63) is pivotally mounted on at least one hook side plate (50, 51) and the hand lever (63) bears a transversely projecting driver pin (67) which engages in a positive fit in a follower orifice (69) in the ram (57) in order to drive same.

14. Bench seat as claimed in claim 13,
**characterised in that**
the hand lever (63) is provided as a dual-arm pivot lever, one pivot arm end thereof bearing a thrust nose (66) which is designed to abut against the side of the locking bolt (45) remote from the base of the locking hook (47) when the hand lever (63) is pivoted into its unlocked position.

15. Bench seat as claimed in one of claims 12 - 14,
**characterised in that**
the two hook side plates (50, 51) are joined to one another by a connecting plate (61) which is attached to the top edge of the two hook side plates (50,. 51) and has a guide orifice (60) for the ram (57), a sliding guide bolt (62) on the ram (57) being retained at a vertical distance apart from the connecting plate (61) between the hook side plates (50, 51).

## Revendications

1. Banquette comportant au moins deux places assises pour véhicules automobiles, en particulier pour petits véhicules transporteurs, avec un bâti supérieur de siège (15) pour supporter des coussins d'assise (16) et un dossier (17), constitué d'une pluralité de montants (22) en forme de L, délimitant une place assise, avec chaque fois une branche courte (221) s'étendant à peu près horizontalement dans la profondeur du coussin d'assise, et une branche longue (222), s'étendant sous une inclinaison supérieure à 90° dans la hauteur du dossier, et d'une pluralité de traverses s'étendant transversalement par rapport aux montants (22), reliant les montants (22) rigidement ensemble, traverses dont au moins deux traverses inférieures sont liées d'un seul tenant aux branches courtes (221) des montants (22), et avec des pieds de siège (18) susceptibles d'être ancrés au fond de la carrosserie du véhicule automobile, fixés sur les au moins deux traverses inférieures,
caractérisée en ce que
toutes les traverses sont réalisées sous la forme de tubes transversaux (23) s'étendant sur la largeur de la banquette et au moins, un tube transversal supérieur (23) relie ensemble les branches longues des montants (22), en ce que les différents montants (22) sont disposés chaque fois espacés les uns des autres à une largeur de place assise, et en ce qu'à chaque place assise (111 à 113, ou 121 à 123, ou 131, 132) est associé un pied de siège (18) qui est chaque fois disposé, de préférence centralement, dans la zone située entre deux montants (22).

2. Banquette selon la revendication 1, caractérisée en ce que les montants (22) et/ou les pieds de siège (18) sont chacun constitués de deux demi-coques (24, 25 ou 26, 27), de préférence fabriquées en un acier à haute résistance, et en ce que les deux demi-coques (24, 25 ou 26, 27) sont reliées ensemble le long de leurs points de joint, par un cordon de liaison roulée (28, 29 ou 30, 31).

3. Banquette selon la revendication 2, caractérisée en ce que les deux demi-coques (24, 25 ou 26, 27) sont placées les unes sur les autres à leurs points de joint, avec des rebords (241, 242, 251, 252 ou 261, 262, 271, 272) repliés à peu près à angle droit, qui sont enroulés intérieurement conjointement, pour donner le cordon de liaison roulée (28, 29 ou 30, 31) au moyen d'un outil de roulage.

4. Banquette selon l'une des revendications 1 à 3, caractérisée en ce qu'un câble de maintien (36), prévu pour la liaison à une paroi latérale de carrosserie (101) du véhicule, est fixé en au moins un montant extérieur (22), situé près de l'extrémité supérieure de la branche longue (222).

5. Banquette selon la revendication 4, caractérisée en ce que le câble de maintien (36) est réalisé sous la forme de boucle (38), logée avec une liaison à interaction de forces, à une extrémité, dans une cosse en acier (39) en forme d'étrier, et en ce que la cosse en acier (39) est maintenue sur un boulon fileté (40), enfiché frontalement dans un tube transversal supérieur (23),

6. Banquette selon la revendication 5, caractérisée en ce que les extrémités de branche des deux branches d'étrier de la cosse en acier (39) sont coudées en s'écartant du montant extérieur (22).

7. Banquette selon l'une des revendications 1 à 6, caractérisée en ce que l'extrémité supérieure de la branche longue (222) d'au moins un montant extérieur (22) est renforcée au moyen de deux profilés de renforcement (32, 33), de préférence conformés en répondant à une symétrie spéculaire, et en ce qu'un élément de renvoi de ceinture (34), prévu pour la ceinture de sécurité à montage trois points (20), est fixé sur l'extrémité de branche renforcée.

8. Banquette selon les revendications 5 et 7, caractérisée en ce que le boulon fileté (40) est soudé à au moins un profilé de renforcement (32).

9. Banquette selon l'une des revendications 1 à 3, caractérisée en ce que sur chaque montant (22) est respectivement prévu un dispositif de fixation, pour l'extrémité de ceinture et/ou une serrure ou boucle de ceinture d'un système de sécurité, et en ce que le système de ceinture de sécurité est réalisé, pour la place assise (111, 113, 123 ou 132) proche de la paroi, avec une extrémité de branche de montant extérieur renforcée, sous la forme d'une ceinture de sécurité à montage trois points (20), et le système de ceinture de sécurité prévu pour les autres places assises (112, 122 ou 131) étant réalisé sous la forme de ceinture de siège à montage deux points (21).

10. Banquette selon l'une des revendications 1 à 9, caractérisée en ce que, pour assurer la fixation des pieds de siège (18) sur le fond de carrosserie (103), à chaque pied de siège (18) est associé un logement de pied (42) fixé au fond de carrosserie (103), en ce que chaque logement de pied (42) présente une plaque de fixation (49) allongée, avec deux auges (43, 44) disposées à distance l'une de l'autre dans l'axe longitudinal de la plaque, et deux boulons de verrouillage (45, 46) disposés chaque fois dans une auge (43, 44), transversalement par rapport à la direction longitudinale de la plaque, en ce que, sur la face frontale opposée au bâti d'assise (15) du pied de siège (18), font saillie deux crochets de verrouillage (47, 48) fixes, disposés à distance l'un de l'autre, qui saisissent par l'arrière les boulons de verrouillage (45, 46), et en ce qu'à au moins un pied de siège (18) est associée une fermeture rapide (35) désolidarisable manuellement, qui bloque le boulon de verrouillage (45) entouré par un crochet de verrouillage (47) pour empêcher toute sortie hors du crochet de verrouillage (47).

11. Banquette selon la revendication 10, caractérisée en ce que chaque crochet de verrouillage (47, 48) est formé par deux profilés de crochet (52, 53), s'étendant chacun depuis l'arête inférieure de deux bandes à crochet (50, 51) congruentes, s'étendant à distance et parallèlement, faisant ainsi saillie d'un seul tenant, et d'une tôle transversale (54) reliant ces profilés entre eux, tôle présentant une nervure transversale (55) montant sous un angle aigu, vers l'extrémité de bande de crochet arrière.

12. Banquette selon la revendication 10 ou 11, caractérisée en ce que la fermeture rapide (56) présente un poussoir (57) mobile, guidé verticalement qui, sous l'effet d'un ressort de rappel, se déplace devant l'ouverture de crochet, ainsi qu'un levier à main (63) pour déplacer le poussoir (57) à l'encontre de la force exercée par le ressort de rappel (58), et en ce qu'une ouverture de passage (59) pour le poussoir (57) est prévue dans la nervure transversale (55) de la tôle transversale (54) appartenant au crochet de verrouillage (47).

13. Banquette selon la revendication 12, caractérisée en ce que le levier à main (63) est fixé à pivotement sur au moins l'une des bandes de crochet (50, 51), et en ce que le levier à main (63) porte une tige d'entraînement (67) faisant saillie transversalement, qui s'engage, par une liaison à ajustement de forme, dans une ouverture d'entraînement (69) ménagée dans le poussoir (57), pour assurer son entraînement.

14. Banquette selon la revendication 13, caractérisée en ce que le levier à main (63) est réalisé sous la forme d'un levier pivotant à deux bras, dont une extrémité de bras pivotant porte un ergot déplaçable (66) réalisé de manière que, lors du pivotement du levier à main (63), à sa position déverrouillage, il vienne en butée sur le boulon de verrouillage (45), sur sa face tournée vers le fond du crochet de verrouillage (47).

15. Banquette selon l'une des revendications 12 à 14, caractérisée en ce que les deux bandes de crochet (50, 51) sont reliées ensemble par une tôle de liaison (61), qui est fixée sur l'arête supérieure des deux bandes de crochet (50, 51) et présente une ouverture de guidage (60) pour le poussoir (57), et en ce que, à distance verticalement, vis-à-vis de la tôle de liaison (61), un boulon de guidage (62), coulissant sur le poussoir (57), est maintenu entre les bandes de crochet (50, 51).
